# EUROPÄISCHE PATENTSCHRIFT

(11) **EP 1 613 996 B1**
(45) Veröffentlichungstag und Bekanntmachung des Hinweises auf die Patenterteilung: **06.06.2012**
(21) Anmeldenummer: 04725357.0
(22) Anmeldetag: 02.04.2004
(51) Int. Cl.: G01N 21/35, G02B 26/08, G02B 7/182

(54) **VORRICHTUNG UND VERFAHREN ZUM OPTISCHEN ABTASTEN VON MEDIEN, OBJEKTEN ODER FLÄCHEN**
DEVICE AND METHOD FOR THE OPTICAL SCANNING OF MEDIA, OBJECTS, OR AREAS
DISPOSITIF ET PROCEDE DE BALAYAGE OPTIQUE DE SUBSTANCES, D'OBJETS ET DE SURFACES

(30) Priorität: 15.04.2003 DE 10317428; 12.02.2004 DE 102004006836
(43) Veröffentlichungstag der Anmeldung: 11.01.2006
(73) Patentinhaber: Open Grid Europe GmbH, 45141 Essen (DE)
(72) Erfinder: ULBRICHT, Matthias, 14532 Kleinmachnow (DE); WITTIG, Reinhard, 14532 Keinmachnow (DE); HOFFSTÄDT, Andreas, 10829 Berlin (DE)
(74) Vertreter: Harlacher, Mechthild
(86) Internationale Anmeldenummer: PCT/EP2004/003550
(87) Internationale Veröffentlichungsnummer: WO 2004/092803

(56) Entgegenhaltungen:
- US-A- 3 091 690
- US-A- 3 672 781
- US-A- 4 555 627
- US-A- 5 132 836
- US-A- 5 231 461
- US-A- 5 293 265
- US-A- 5 451 787

## Beschreibung

Die Erfindung betrifft eine Vorrichtung und ein Verfahren zum optischen Abtasten von Medien, Objekten oder Flächen, mit einem Umlenkspiegel zum Umlenken von Lichtstrahlung, wobei der Umlenkspiegel mit einem Antrieb verbunden und rotierbar ist und wobei die Spiegelnormale gegenüber der Rotationsachse gekippt ist.

Derartige Vorrichtungen werden insbesondere zum Abtasten von Flächen verwendet, beispielsweise um diese zu kartieren.

Aus der US 4 555 627 ist ein Verfahren und eine Vorrichtung zum Detektieren von Gas in der Atmosphäre, insbesondere Erdgas aus Leckagen in Transportleitungen oder Speichern bekannt. Die Vorrichtung weist eine Lichtquelle in Form eines Lasers, ein System von Umlenkspiegeln für die Lichtstrahlung und eine bildgebende Einrichtung mit einer Videoanzeige auf, mittels der eine detektierte Gaswolke visualisiert werden kann.

Bei der Femerkundung bzw. Fernortung von Gasen, insbesondere von Kohlenwasserstoffen wie Methan, in dem Luftraum bzw. der Atmosphäre über dem Boden wird Licht, das von dem Boden oder der Atmosphäre aufgrund Strahlungsemission oder aufgrund von Streuung bzw. Reflektion von Licht aus einer Lichtquelle ausgeht, analysiert. Dazu wird die Lichtstrahlung mit einem Teleskop auf einen Detektor fokussiert. Es kann sich um Lichtstrahlung im ultravioletten, sichtbaren oder infraroten Spektralbereich handeln.

Wenn eine hohe Empfindlichkeit erzielt werden soll und/oder die Lichtmengen, die von der Atmosphäre oder einer Fläche ausgestrahlt werden, relativ klein sind, müssen Teleskope bzw. Empfangssysteme mit großen optischen Aperturen eingesetzt werden, deren Durchmesser bis zu einigen 10 cm betragen kann.

Um eine Fläche schnell abtasten zu können, muss entweder das Empfangssystem entsprechend schnell bewegt oder das Gesichtfeld des Teleskops mittels einer geeigneten Einrichtung kontinuierlich neu ausgerichtet werden.

Für Empfangssysteme bzw. Teleskope mit großen optischen Aperturen kommt die Bewegung des Empfangssystems oder des Teleskops aufgrund der Baugröße und der sich daraus ergebenden Antriebsprobleme nicht in Frage.

Bei Empfangssystemen mit kleinen optischen Aperturen, d. h. mit Durchmessern kleiner als 1 cm, ist die Verwendung von Umlenkspiegeln zum Umlenken der Lichtstrahlung zwischen der Fläche oder einem Objekt und dem Empfangssystem bekannt. Die Umlenkspiegel werden z. B. mit Piezo-Elementen oder Galvo-Scannern angetrieben. Für Empfangssysteme mit größeren optischen Aperturen sind solche Antriebe nicht verfügbar oder zu aufwendig.

Weiterhin ist aus der Praxis ein Umlenksystem mit zwei Umfenkspiegeln bekannt, wobei ein erster Umlenkspiegel den Lichtstrahl um 90° umlenkt. Mittels eines zweiten Umlenkspiegels, der den Lichtstrahl erneut umlenkt, kann eine Fläche relativ schnell abgetastet werden. Allerdings ist der Einsatz von zwei Umlenkspiegeln konstruktiv aufwendig und kostenintensiv.

Weiterhin ist ein kardanisch angetriebener Umlenkspiegel bekannt. Hier wird der Umlenkspiegel schnell um die kardanischen Achsen bewegt. Nachteilig sind die dabei auftretenden sehr hohen Beschleunigungen. Die schnelle Bewegungsumkehr sorgt für eine sehr hohe mechanische Belastung aller Komponenten und erfordert sehr leistungsstarke Antriebe für die Umlenkspiegel, um die notwendigen starken Beschleunigungen zu erzielen. Darüber hinaus werden durch die starken Beschleunigungen Vibrationen in das Messsystem eingebracht, die sich nachteilig auswirken können.

Die Aufgabe der Erfindung besteht demgemäß darin, eine konstruktiv einfache Vorrichtung der eingangs genannten Art zu schaffen, mit der große Flächen schnell abgetastet werden können.

Diese Aufgabe wird durch eine Vorrichtung zum optischen Abtasten von Medien, Objekten oder Flächen mit den Merkmalen des Anspruchs 1 gelöst.

Erfindungsgemäß befindet sich der Umlenkspiegel in einer gelagerten Fassung wobei der Umlenkspiegel mit mindestens einem Ausgleichsmasse-Element versehen ist, so dass die Rotationsachse identisch mit der Hauptträgheitsachse des Umlenkspiegels zusammen mit der Fassung ist.

Der Umlenkspiegel ist rotierbar, wobei die Spiegeinormale gegenüber der Rotationsachse gekippt ist. Die Kippachse verläuft senkrecht zur Spiegelnormalen. Der Umlenkspiegel macht während der Rotation eine Taumelbewegung. Der Lichtstrahl beschreibt auf der Zielfläche eine Ellipse. Folglich kann die Abtastgeschwindigkeit groß sein. Da der Antrieb für die Rotationsbewegung keine großen Beschleunigungskräfte aufbringen muss, kann ein kostengünstiger Antrieb mit kleiner Leistung verwendet werden.

Vorteilhafterweise ist die Position des Ausgleichsmasse-Elements in Bezug auf den Umlenkspiegel verstellbar.

Vorzugsweise ist das Ausgleichsmasse-Element als Ring ausgebildet, der konzentrisch den Umlenkspiegel umgibt. Als Ring kann beispielsweise ein Metallring verwendet werden. Wenn die Rotationsachse identisch mit der Spiegelnormalen ist, befinden sich der Umlenkspiegel und der Ring in einer Ebene. Wenn der Umlenkspiegel um eine Achse senkrecht zur Spiegelnormalen gekippt wird, kippt der Ring um die gleiche Achse in entgegengesetzter Richtung. Bei entsprechender Auslegung des Metallringes sowie der Verstellung kann die dynamische Unwucht des verkippten Umlenkspiegels vollständig kompensiert werden. Die Kippachse wird vorzugsweise durch den Schwerpunkt des Spiegels samt Fassung gelegt, um statische Unwuchten zu vermeiden.

Eine bevorzugte Ausführungsform ist dadurch gekennzeichnet, dass der Umlenkspiegel um eine Achse senkrecht zur Rotationsachse kippbar ist und dass das Ausgleichsmasse-Element in Bezug auf den Umlenkspiegel um dieselbe Achse, vorzugsweise mit einem gemeinsamen Antrieb kippbar ist.

Vorzugsweise lenkt der Umlenkspiegel die Lichtstrahlung auf ein Empfangssystem, welches ein Teleskop und einen Detektor aufweist. Da Teleskope mit großer Apertur eingesetzt werden können, ist die Vorrichtung besonders als Bestandteil eines optischen Fernerkundungs- bzw. Fernortungssystems für Gase, insbesondere für Kohlenwasserstoffe wie Methan oder für Erdgas geeignet. Es ist für derartige Anwendungen vorteilhaft, wenn die Lichtstrahlung aus einer Laserlichtquelle stammt.

Im Rahmen der Erfindung kann die Lichtstrahlung auch Sonnenlicht sein. Es kann sich auch um die Lichtstrahlung handeln, z. B. Wärmestrahlung, die von Objekten oder Flächen emittiert wird.

Der Winkel zwischen der Spiegelnormalen und der Rotationsachse, d. h. der Kippwinkel ist im einfachsten Fall fest eingestellt. Es ist jedoch vorteilhaft, wenn der Winkel zwischen der Spiegelnormalen und der Rotationsachse verstellbar bzw. frei wählbar ist. Vorzugsweise wird für die Verstellung ein zweiter Antrieb eingesetzt, der vorzugsweise ansteuerbar ist.

Durch die Kippung der Spiegelnormalen gegen die Rotationsachse werden bei der Drehbewegung dynamische Unwuchtmomente erzeugt, die zu starken Vibrationen führen können. Daher schlägt die Erfindung vor, den Spiegel und die Fassung so zu formen, dass die Rotationsachse identisch mit einer Hauptträgheitsachse des Umlenkspiegels zusammen mit der Fassung ist.

Vorteilhafterweise ist die Vorrichtung als Bestandteil eines optischen Fernerkundungs- bzw. Fernortungssystems für Gase mit einer Navigationseinrichtung versehen und in einem Fluggerät installiert. Bei der Navigationseinrichtung kann es sich um ein bekanntes Global Positioning System (GPS) handeln.

Zur Lösung der Aufgabe ist ein Verfahren zum optischen Abtasten von Medien, Objekten oder Flächen, mit einem Umlenkspiegel zum Umlenken von Lichtstrahlung , wobei der Umlenkspiegel mit einem Antrieb verbunden ist, dadurch gekennzeichnet, dass der Umlenkspiegel um eine Rotationsachse rotiert, wobei die Spiegeinormale gegenüber der Rotationsachse gekippt ist und wobei gleichzeitig der Umlenkspiegel über das Medium, das Objekt oder die Fläche geführt wird. Die Rotationsbewegung wird somit durch eine zweite Bewegung überlagert. Wenn eine Fläche, beispielsweise die Trasse einer Gasrohrleitung abgetastet werden soll, verläuft die zweite Bewegung im Wesentlichen parallel zu der Fläche.

Alternativ ist es möglich, dass der Umlenkspiegel um eine Rotationsachse rotiert, wobei die Spiegelnormale gegenüber der Rotationsachse gekippt ist und wobei gleichzeitig der Kippwinkel kontinuierlich verändert wird. Der Umlenkspiegel rotiert gleichförmig und schnell, während die kontinuierliche Kippbewegung langsam erfolgt. Auf diese Weise werden auch für hohe Abtastgeschwindigkeiten nur relativ kleine Antriebe benötigt.

Das erfindungsgemäße Verfahren kann besonders vorteilhaft in einem Überwachungsverfahren für erdverlegte Erdgasleitungen mittels eines Fluggerätes verwendet werden. Auf diese Weise können Lecks in einem Leitungsnetz durch Überfliegen der Trasse mit einem geeigneten Fluggerät, insbesondere einem Helikopter, schnell erkannt werden.

Die Erfindung wird im Folgenden anhand eines Ausführungsbeispiels erläutert.

Die Zeichnung zeigt in
Fig. 1 schematisch eine erfindungsgemäße Vorrichtung;
Fig. 2 die erfindungsgemäße Vorrichtung in einem Schnitt in Seitenansicht, wobei der Umlenkspiegel gekippt ist;
Fig. 3 die erfindungsgemäße Vorrichtung in Vorderansicht;
Fig. 4 die erfindungsgemäße Vorrichtung in einem Schnitt in Seitenansicht, wobei der Umlenkspiegel nicht gekippt ist.

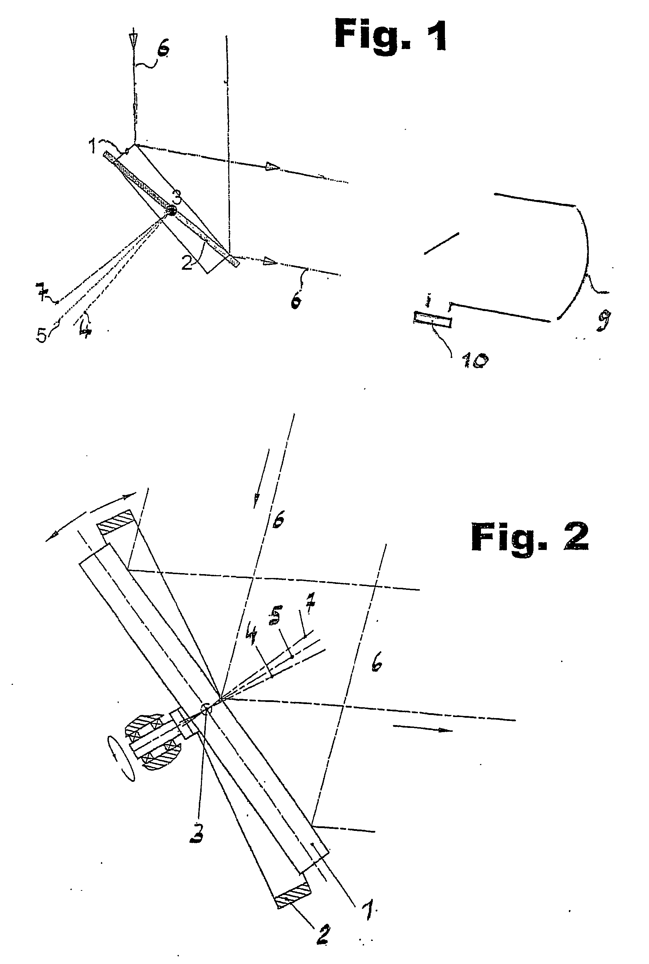

Die in Fig. 1 bis 4 gezeigte Vorrichtung ist mit einem nicht dargestellten Navigationssystem verbunden und ist Bestandteil eines optischen Fernerkundungssystems für Kohlenwasserstoffe. Das Fernerkundungssystem ist in einem Helikopter installiert und wird zur Fernortung von Kohlenwasserstoffen in der Atmosphäre, insbesondere von Methan oder von Erdgas zur Detektion von Lecks in erdverlegten Erdgasleitungen verwendet. Von einer nicht dargestellten Laserlichtquelle wird ein Laserlichtstrahl ausgesendet, der sich auf der abzutastenden Fläche bzw. dem Boden verteilt. Der Helikopter fliegt mit einer Geschwindigkeit von ca. 80 bis 100 km/h über die Trasse der Erdgasleitung.

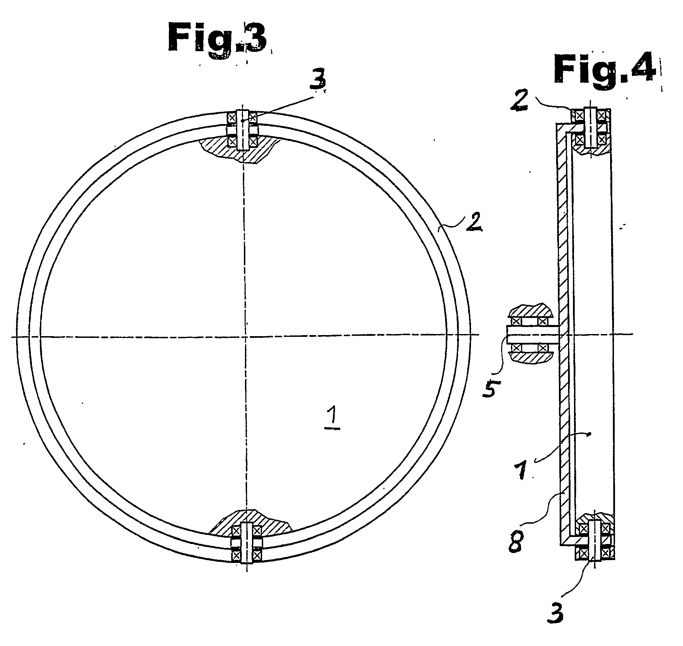

Im Wege des Laserlichtstrahls und des zurückgestreuten Lichts befindet sich ein rotierender Umlenkspiegel 1, der eben ausgebildet ist. Der Umlenkspiegel 1 ist um eine Kippachse 3, die senkrecht zu der Spiegelnormalen 7 verläuft, mit Hilfe eines nicht dargestellten ansteuerbaren Antriebs gekippt. Da die Spiegelnormale 7 die Senkrechte zur Spiegelfläche ist, steht die Rotationsachse 5 somit in einem Winkel zur Spiegelnormalen 7. Fig. 4 ist zu entnehmen, dass sich der Umlenkspiegel 1 in einer gelagerten Fassung 8 befindet.

Der Umlenkspiegel 1 rotiert gleichförmig und relativ schnell um die Rotationsachse 5. Die Rotationsgeschwindigkeit beträgt beispielsweise 300 U/min. Der Winkel zwischen der Spiegelnormalen und der Rotationsachse ist frei wählbar und kann beispielsweise 7° betragen.

Die Lichtstrahlung 6 wird im Wesentlichen um 90° umgelenkt. Es wird sowohl die ausgesendete Lichtstrahlung als auch die zurückgestreute Lichtstrahlung umgelenkt. Durch Verstellung des Winkels zwischen der Spiegelnormalen und der Rotationsachse kann die Breite der abzutastenden Fläche an die Anforderung aufgrund der Topographie der Zielfläche eingestellt werden. Der Strahl beschreibt eine elliptische Spiralbahn. Durch die Überlagerung des Abtastens mit der Flugbewegung liegen die Messpunkte auf einer Zykloiden.

Das von dem Boden bzw. der Atmosphäre zurückgestreute Licht wird mit einem Teleskop 9, das eine große optische Apertur aufweist, gesammelt und auf einen Detektor 10 fokussiert. Der Laserlichtstrahl wird koaxial zur Achse des Teleskops ausgesandt. Bei einer Leckage ist der Methangehalt in der Atmosphäre über dem Boden erhöht, da Erdgas hauptsächlich aus Methan besteht. Methan absorbiert bei bestimmten Wellenlängen das ausgesendete Licht, so dass durch Auswertung des zurückkehrenden Lichts die Konzentration des Methans in der Atmosphäre bestimmt werden kann.

Es müssen geeignete Maßnahmen getroffen werden, um Unwuchten bei der Rotation zu kompensieren. Daher ist der Umlenkspiegel 1 von einem Ausgleichsmasse-Element 2, das eine Hauptträgheitsachse 4 aufweist konzentrisch umgeben. Das Ausgleichsmasse-Element 2 ist als Metallring ausgebildet. Wenn die Rotationsachse 5 identisch mit der Spiegelnormalen 7 ist, befindet sich der Umlenkspiegel 1 und der Metallring 2 in einer Ebene. Wenn der Umlenkspiegel 1 um die Kippachse 3 senkrecht zur Spiegelnormalen gekippt wird, kippt der Metallring 2 um die gleiche Achse 3 in entgegengesetzter Richtung. Die Hauptträgheitsachse des Umlenkspiegels 1 entspricht der Spiegelnormalen 7, da der Umlenkspiegel 1 rotationssymmetrisch ist. Bei entsprechender Auslegung des Metallringes 2 sowie der Verstellung kann die dynamische Unwucht des verkippten Umlenkspiegels 1 vollständig kompensiert werden.

Im Rahmen der Erfindung kann der Umlenkspiegel 1 während der Rotation eine kontinuierliche Kippbewegung um eine Achse 3 senkrecht zur Spiegelnormalen 7 machen, so dass sich der Winkel zwischen der Rotationsachse 5 und der Spiegelnormalen 7 kontinuierlich ändert.

Der Umlenkspiegel und die Fassung sind so geformt, dass die Rotationsachse 5 im Wesentlichen identisch mit einer Hauptträgheitsachse des Umlenkspiegels 1 zusammen mit der Fassung 8 ist.

## Patentansprüche

1. Vorrichtung zum optischen Abtasten von Medien, Objekten oder Flächen, mit einem Umlenkspiegel (1) zum Umlenken von Lichtstrahlung (6), wobei der Umlenkspiegel (1) mit einem Antrieb verbunden und rotierbar ist und wobei die Spiegelnormale (7) gegenüber der Rotationsachse (5) gekippt ist, **dadurch gekennzeichnet, dass** sich der Umlenkspiegel (1) in einer gelagerten Fassung (8) befindet und dass der Umlenkspiegel (1) mit mindestens einem Ausgleichsmasse-Element (2) versehen ist, so dass die Rotationsachse (5) identisch mit der Hauptträgheitsachse des Umlenkspiegels (1) zusammen mit der Fassung (8) ist.

2. Vorrichtung nach Anspruch 1,
**dadurch gekennzeichnet, dass** die Position des Ausgleichsmasse-Elements (2) in Bezug auf den Umlenkspiegel (1) verstellbar ist.

3. Vorrichtung nach Anspruch 1 oder 2,
**dadurch gekennzeichnet, dass** das Ausgleichsmasse-Element (2) als Ring ausgebildet ist, der konzentrisch den Umlenkspiegel (1) umgibt.

4. Vorrichtung nach einem der Ansprüche 1 bis 3,
**dadurch gekennzeichnet, dass** der Umlenkspiegel (1) um eine Achse (3) senkrecht zur Rotationsachse (5) kippbar ist und dass das Ausgleichsmasse-Element (2) in Bezug auf den Umlenkspiegel (1) um dieselbe Achse (3), vorzugsweise mit einem gemeinsamen Antrieb kippbar ist.

5. Vorrichtung nach einem der Ansprüche 1 bis 4,
**dadurch gekennzeichnet, dass** der Umlenkspiegel (1) die Lichtstrahlung auf ein Empfangssystem umlenkt, welches ein Teleskop (9) und einen Detektor (10) aufweist.

6. Vorrichtung nach einem der Ansprüche 1 bis 5,
**dadurch gekennzeichnet, dass** die Lichtstrahlung aus einer Laserlichtquelle stammt.

7. Vorrichtung nach einem der Ansprüche 1 bis 5,
**dadurch gekennzeichnet, dass** die Lichtstrahlung Sonnenlicht ist.

8. Vorrichtung nach einem der Ansprüche 1 bis 5,
**dadurch gekennzeichnet, dass** die Lichtstrahlung von Objekten oder Flächen emittiert wird.

9. Vorrichtung nach einem der Ansprüche 1 bis 8,
**dadurch gekennzeichnet, dass** der Winkel zwischen der Rotationsachse (5) und der Spiegelnormalen (7) verstellbar ist.

10. Vorrichtung nach Anspruch 9,
**gekennzeichnet durch** einen zweiten Antrieb zur Verstellung des Winkels zwischen der Rotationsachse (5) und der Spiegelnormalen (7).

11. Vorrichtung nach einem der Ansprüche 1 bis 10,
**dadurch gekennzeichnet**, das diese als Bestandteil eines optischen Fernerkundungssystems für Gase, insbesondere für Kohlenwasserstoffe ausgebildet ist.

12. Vorrichtung nach Anspruch 11,
**dadurch gekennzeichnet, dass** diese mit einer Navigationseinrichtung versehen und in einem Fluggerät installierbar ist.

13. Verfahren zum optischen Abtasten von Medien, Objekten oder Flächen zur optischen Femerkundung von Gasen, insbesondere von Kohlenwasserstoffen, mit einem Umlenkspiegel zum Umlenken von Lichtstrahlung, wobei der Umlenkspiegel mit einem Antrieb verbunden ist, **dadurch gekennzeichnet, dass** der Umlenkspiegel um eine Rotationsachse rotiert, wobei die Spiegelnormale gegenüber der Rotationsachse gekippt ist, und wobei gleichzeitig der Umlenkspiegel über das Medium, das Objekt oder die Fläche geführt wird.

14. Verwendung nach Anspruch 13, **dadurch gekennzeichnet, dass** das Verfahren in einem Überwachungsverfahren für erdverlegte Erdgasleitungen mittels eines Fluggerätes verwendet wird.

## Claims

1. Device for optically scanning media, objects or areas, having a deflecting mirror (1) for deflecting optical radiation (6), the deflecting mirror (1) being connected to a drive and capable of rotation, and the mirror normal (7) being tilted relative to the rotation axis (5), **characterized in that** the deflecting mirror (1) is located in a supported mount (8), and **in that** the deflecting mirror (1) is provided with at least one mass-balance weight element (2) so that the rotation axis (5) is identical to the principal inertia axis of the deflecting mirror (1) together with the mount (8).

2. Device according to Claim 1, **characterized in that** the position of the mass-balance weight element (2) can be adjusted with reference to the deflecting mirror (1).

3. Device according to Claim 1 or 2, **characterized in that** the mass-balance weight element (2) is designed as a ring which concentrically surrounds the deflecting mirror (1).

4. Device according to one of Claims 1 to 3, **characterized in that** the deflecting mirror (1) can be tilted about an axis (3) perpendicular to the rotation axis (5), and **in that** the mass-balance weight element (2) can be tilted with reference to the deflecting mirror (1) about the same axis (3), preferably can be tilted with the aid of a common drive.

5. Device according to one of Claims 1 to 4, **characterized in that** the deflecting mirror (1) deflects the optical radiation onto a receiving system which has a telescope (9) and a detector (10).

6. Device according to one of Claims 1 to 5, **characterized in that** the optical radiation originates from a laser light source.

7. Device according to one of Claims 1 to 5, **characterized in that** the optical radiation is sunlight.

8. Device according to one of Claims 1 to 5, **characterized in that** the optical radiation is emitted by objects or areas.

9. Device according to one of Claims 1 to 8, **characterized in that** the angle between the rotation axis (5) and the mirror normal (7) can be adjusted.

10. Device according to Claim 9, **characterized by** a second drive for adjusting the angle between the rotation axis (5) and the mirror normal (7).

11. Device according to one of Claims 1 to 10, **characterized in that** said device is designed as a component of an optical remote sensing system for gases, in particular for hydrocarbons.

12. Device according to Claim 11, **characterized in that** said device is provided with a navigation device and can be installed in a flying apparatus.

13. Method for optically scanning media, objects or areas for the purpose of optical remote sensing of gases, in particular of hydrocarbons, having a deflecting mirror for deflecting optical radiation, the deflecting mirror being connected to a drive, **characterized in that** the deflecting mirror rotates about a rotation axis, the mirror normal being tilted relative to the rotation axis, and the deflecting mirror being simultaneously guided over the medium, the object or the area.

14. Use according to Claim 13, **characterized in that** the method is used in a monitoring method for buried natural gas lines by means of a flying apparatus.

## Revendications

1. Dispositif de balayage optique de substances, d'objets ou de surfaces, avec un miroir de déviation (1) pour dévier le rayonnement lumineux (6), dans lequel le miroir de déviation (1) est relié à une commande et peut pivoter et dans lequel la normale au miroir (7) est basculée par rapport à l'axe de rotation (5), **caractérisé en ce que** le miroir de déviation (1) se trouve monté sur palier (8) et **en ce que** le miroir de déviation (1) est pourvu d'au moins un élément de masse d'équilibrage (2) de telle sorte que l'axe de rotation (5) soit identique avec l'axe d'inertie principal du miroir de déviation (1) associé à la monture (8).

2. Dispositif selon la revendication 1,
**caractérisé en ce que** la position de l'élément de masse d'équilibrage (2) est réglable par rapport au miroir de déviation (1).

3. Dispositif selon la revendication 1 ou 2,
**caractérisé en ce que** l'élément de masse d'équilibrage (2) est réalisé en forme d'anneau entourant concentriquement le miroir de déviation (1).

4. Dispositif selon une des revendications 1 à 3,
**caractérisé en ce que** le miroir de déviation (1) peut basculer autour d'un axe (3) perpendiculaire à l'axe de rotation (5) et **en ce que** l'élément de masse d'équilibrage (2) peut basculer par rapport au miroir de déviation (1) autour du même axe (3), de préférence avec une commande commune.

5. Dispositif selon une des revendications 1 à 4,
**caractérisé en ce que** le miroir de déviation (1) dévie le rayonnement lumineux vers un système de réception comportant un télescope (9) et un détecteur (10).

6. Dispositif selon une des revendications 1 à 5,
**caractérisé en ce que** le rayonnement lumineux provient d'une source lumineuse à laser.

7. Dispositif selon une des revendications 1 à 5,
**caractérisé en ce que** le rayonnement lumineux est la lumière solaire.

8. Dispositif selon une des revendications 1 à 5,
**caractérisé en ce que** le rayonnement lumineux est émis par des objets ou des surfaces.

9. Dispositif selon une des revendications 1 à 8,
**caractérisé en ce que** l'angle entre l'axe de rotation (5) et la normale au miroir (7) est réglable.

10. Dispositif selon la revendication 9,
**caractérisé par** une deuxième commande pour régler l'angle entre l'axe de rotation (5) et la normale au miroir (7).

11. Dispositif selon une des revendications 1 à 10,
**caractérisé en ce que** celui-ci est réalisé sous la forme d'un composant d'un système optique de télédétection pour les gaz, notamment pour les hydrocarbures.

12. Dispositif selon la revendication 11,
**caractérisé en ce que** celui-ci est pourvu d'un appareil de navigation et peut être installé dans un aéronef.

13. Procédé de balayage optique de substances, d'objets ou de surfaces pour la télédétection de gaz, notamment d'hydrocarbures, avec un miroir de déviation pour dévier le rayonnement lumineux, dans lequel le miroir de déviation est relié à une commande, **caractérisé en ce que** le miroir de déviation tourne autour d'un axe de rotation, dans lequel la normale au miroir est basculée par rapport à l'axe de rotation et dans lequel le miroir de déviation est simultanément guidé sur la substance, l'objet ou la surface.

14. Utilisation selon la revendication 13, **caractérisée en ce que** le procédé est utilisé dans un procédé de contrôle au moyen d'un aéronef de conduites enterrées de gaz naturel.
